# EUROPEAN PATENT APPLICATION

(11) **EP 4 836 183 A1**
(43) Date of publication of application: **04.11.2026**
(21) Application number: 24914837.0
(22) Date of filing: 21.08.2024
(51) Int. Cl.: H01M 50/618, H01M 50/609, H01M 50/60, H01M 50/00

(54) **ELECTROLYTE FILLING METHOD FOR BATTERY**

(30) Priority: 03.01.2024 CN 202410012251
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: WU, Chaoyang, Ningde, Fujian 352100 (CN); GUAN, Feng, Ningde, Fujian 352100 (CN); WANG, Zhihui, Ningde, Fujian 352100 (CN)
(74) Representative: Ziebig Hengelhaupt Intellectual Property Attorneys Patentanwaltskanzlei PartGmbB
(86) International application number: PCT/CN2024/113694
(87) International publication number: WO 2025/145615

(57) **Abstract**

Disclosed is an electrolyte filling method for a battery (2), the battery (2) comprising a switching valve (21) having an open state and a closed state. A processing apparatus comprises a vacuum evacuation system and an electrolyte filling system which are independent from each other. The electrolyte filling method comprises a vacuum evacuation step followed by an electrolyte filling step. The vacuum evacuation step comprises: connecting a vacuum evacuation pipe of the vacuum evacuation system to the switching valve (21) to bring the switching valve (21) into the open state; controlling a vacuum evacuation device of the vacuum evacuation system to perform vacuum evacuation on the battery (2); and separating the vacuum evacuation pipe from the switching valve (21) after it is confirmed that the vacuum evacuation is completed, so as to bring the switching valve (21) into the closed state. The electrolyte filling step comprises: connecting an electrolyte filling device (1) of the electrolyte filling system to the switching valve (21) to bring the switching valve (21) into the open state; controlling the electrolyte filling system to fill the battery (2) with an electrolyte; and separating an electrolyte filling pipe from the switching valve (21) after it is confirmed that the electrolyte filling is completed, so as to bring the switching valve (21) into the closed state.

## Description

### CROSS-REFERENCE TO RELATED APPLICATIONS

The present disclosure is based on Application No. 202410012251.5, filed on January 03, 2024 and entitled "ELECTROLYTE INJECTION METHOD FOR BATTERY", and claims priority to the Chinese Patent application, which is incorporated herein by reference in its entirety.

### TECHNICAL FIELD

The present disclosure relates to the field of battery technologies, and in particular, to an electrolyte injection method for a battery.

### BACKGROUND

This section is intended to provide background or context for the embodiments of the present disclosure. The descriptions herein are not admitted to be prior art by virtue of their inclusion in this section.

In the related art, before an electrolyte injection hole of a battery is sealed, the interior of a housing of the battery communicates with the external environment, so that the environment of the housing is not a vacuum environment before electrolyte injection of the battery. It is necessary to continuously maintain a relatively sealed state from the external environment after vacuum pumping operation for the battery is completed. A common solution is to use a shared pipeline for vacuum pumping and electrolyte injection. After the vacuum pumping operation is completed, function switching is achieved by switching to an electrolyte injection switch valve. Since electrolyte residue is difficult to avoid in the pipeline, combined with vacuum diffusion, the pipelines and valve bodies of a vacuum pumping device are eventually blocked by electrolyte crystallization.

### SUMMARY

In view of this, embodiments of the present disclosure expect to provide an electrolyte injection method for a battery, which can avoid the problem that pipelines and valve bodies of a vacuum pumping system are blocked by electrolyte crystallization.

To achieve the above objective, embodiments of the present disclosure provide an electrolyte injection method for a battery, which is applied to processing equipment for production of the battery. The battery includes a switch valve having an opened state and a closed state. The processing equipment includes a vacuum pumping system and an electrolyte injection system that are independent of each other;
the electrolyte injection method includes a vacuum pumping step and an electrolyte injection step after the vacuum pumping step;
where the vacuum pumping step includes:
   mating a vacuum pumping pipeline of the vacuum pumping system with the switch valve such that the switch valve is in an opened state;
   controlling a vacuum pumping device of the vacuum pumping system to perform vacuum pumping on the battery; and
   disconnecting, after confirming that vacuum pumping is completed, the vacuum pumping pipeline from the switch valve such that the switch valve is in a closed state; and
   the electrolyte injection step includes:
      mating an electrolyte injection device of the electrolyte injection system with the switch valve such that the switch valve is in an opened state;
      controlling the electrolyte injection system to perform electrolyte injection on the battery; and
      disconnecting, after confirming that electrolyte injection is completed, the electrolyte injection device from the switch valve such that the switch valve is in a closed state.

The electrolyte injection method of the battery of the embodiments of the present disclosure is applied to processing equipment for production of the battery. The battery includes a switch valve having an opened state and a closed state. The processing equipment includes a vacuum pumping system and an electrolyte injection system that are independent of each other. A vacuum pumping pipeline of the vacuum pumping system is mated with the switch valve to perform vacuum pumping. After confirming that vacuum pumping is completed, the vacuum pumping pipeline is disconnected from the switch valve such that a vacuum state is maintained inside the battery. Then, an electrolyte injection device of the electrolyte injection system is mated with the switch valve to perform electrolyte injection. After confirming that electrolyte injection is completed, the electrolyte injection device is disconnected from the switch valve to complete electrolyte injection of the battery. In this way, the vacuum pumping system and the electrolyte injection system are independent of each other and do not need to share a pipeline, which can prevent the vacuum pumping system from suctioning residual electrolyte, thereby avoiding the problem that pipelines and valve bodies of the vacuum pumping system are blocked by electrolyte crystallization.

In some embodiments, the processing equipment includes a first station and a second station. The vacuum pumping step is performed at the first station, and the electrolyte injection step is performed at the second station.

That is, the vacuum pumping step and the electrolyte injection step are arranged at different stations. Specifically, the vacuum pumping step and the electrolyte injection step are separated, where the vacuum pumping step is performed at the first station, and the electrolyte injection step is performed at the second station. In this way, the vacuum pumping time in the vacuum pumping step can be increased to improve the vacuum degree of an internal cavity of the battery and improve electrolyte injection efficiency without affecting the production tempo.

In some embodiments, the electrolyte injection device includes an electrolyte injection cup and a valve-opening device having an opened state and a closed state. The valve-opening device is configured to mate with the switch valve and open the switch valve such that an internal cavity of the electrolyte injection cup communicates with the internal cavity of the battery. The mating the electrolyte injection device of the electrolyte injection system with the switch valve such that the switch valve is in an opened state includes:
mating the valve-opening device with the switch valve such that both the switch valve and the valve-opening device are in an opened state.

By providing a valve-opening device having an opened state and a closed state, in the closed state, a flow channel of the valve-opening device does not communicate with the internal cavity of the battery. In this way, even if an electrolyte in the electrolyte injection cup enters the flow channel of the valve-opening device, the electrolyte in the valve-opening device does not flow out through the flow channel. In the process of performing electrolyte injection on the battery, the switch valve of the battery can apply a force to the valve-opening device. The valve-opening device can be switched from the closed state to the opened state under the action of an external force. At this time, the flow channel of the valve-opening device communicates with the internal cavity of the battery, and the electrolyte in the electrolyte injection cup can enter the interior of the battery through the flow channel to achieve electrolyte injection. After electrolyte injection is completed, the valve-opening device and the switch valve are disconnected, and the valve-opening device is switched from the opened state to the closed state. That is, the valve-opening device is a normally closed valve-opening device. In this way, electrolyte can be injected into the electrolyte injection cup in advance at any time before the battery and the electrolyte injection cup are combined, which can reduce serial time (electrolyte preparation time) and improve production efficiency and production tempo.

In some embodiments, the electrolyte injection method further includes an electrolyte preparation step. The electrolyte preparation step is performed before the vacuum pumping step, or is performed simultaneously with the vacuum pumping step; where the electrolyte preparation step is used to inject electrolyte into the electrolyte injection cup.

Since both the switch valve of the battery and the valve-opening device of the electrolyte injection system are normally closed, electrolyte can be injected into the electrolyte injection cup in advance at any time before the battery and the electrolyte injection cup are combined, thereby reducing serial time (electrolyte preparation time) to improve production efficiency.

In some embodiments, both the switch valve and the valve-opening device being in an opened state includes:
controlling the switch valve to open before the valve-opening device; or controlling the switch valve and the valve-opening device to open simultaneously.

By setting an opening pressure of the valve-opening device to be greater than or equal to an opening pressure of the switch valve, the situation where the switch valve of the battery is still in a closed state after the valve-opening device is opened can be avoided, thereby mitigating the problem of electrolyte leakage.

In some embodiments, the electrolyte injection method further includes an assembling step. The assembling step is performed before the vacuum pumping step, or is performed after the vacuum pumping step; where the assembling step is used for assembling individual batteries into a battery assembly.

The electrolyte injection method further includes the assembling step. The assembling step is used for assembling individual batteries into the battery assembly, which facilitates the transfer of batteries and subsequent operations, thereby improving production efficiency.

The assembling step may be performed before the vacuum pumping step or after the vacuum pumping step. That is, vacuum pumping may be performed before the batteries are assembled, that is, individual batteries are assembled into the battery assembly after vacuum pumping; or vacuum pumping may be performed after the batteries are assembled, that is, individual batteries are first formed into a battery assembly, and vacuum pumping is then performed on the battery assembly.

In some embodiments, the processing equipment further includes a detection device. Before the vacuum pumping step, the detection device is used to detect whether the switch valve is in a closed state.

By providing a detection device and using the detection device to detect whether the switch valve is in a closed state before the vacuum pumping step, for example, to detect whether the switch valve is missing or damaged, the situation where vacuum pumping of the battery cannot be performed due to missing or damaged switch valve can be avoided to a certain extent, thereby improving production efficiency of the battery and quality of the battery to a certain extent.

In some embodiments, the processing equipment further includes a detection device. Before the electrolyte injection step, the detection device is used to detect whether the switch valve is in a closed state.

By providing a detection device and using the detection device to detect whether the switch valve is in a closed state before the electrolyte injection step, for example, to detect whether the switch valve is missing or damaged, the situation where electrolyte injection of the battery cannot be performed due to missing or damaged switch valve can be avoided to a certain extent, thereby improving production efficiency of the battery and quality of the battery to a certain extent.

In some embodiments, the detection device is an optical fiber sensor or a machine vision device.

In some embodiments, the method for confirming completion of vacuum pumping includes: confirming completion of vacuum pumping based on a target vacuum degree inside the battery.

That is, by detecting the vacuum degree inside the battery, when the vacuum degree inside the battery reaches the target vacuum degree, it indicates that vacuum pumping is completed and vacuum pumping can be stopped.

In some embodiments, the method for confirming completion of vacuum pumping includes: confirming completion of vacuum pumping based on a target vacuum pumping time for the battery.

That is, by timing the vacuum pumping time of the battery, when the vacuum pumping time for the battery reaches the target vacuum pumping time, it indicates that vacuum pumping is completed and vacuum pumping can be stopped.

An electrolyte injection method for a battery of the embodiments of the present disclosure is applied to processing equipment for production of the battery. The battery includes a switch valve having an opened state and a closed state. The processing equipment includes a vacuum pumping system and an electrolyte injection system that are independent of each other. A vacuum pumping pipeline of the vacuum pumping system is mated with the switch valve to perform vacuum pumping. After confirming that vacuum pumping is completed, the vacuum pumping pipeline is disconnected from the switch valve such that a vacuum state is maintained inside the battery. Then, an electrolyte injection device of the electrolyte injection system is mated with the switch valve to perform electrolyte injection. After confirming that electrolyte injection is completed, the electrolyte injection device is disconnected from the switch valve to complete electrolyte injection of the battery. In this way, the vacuum pumping system and the electrolyte injection system are independent of each other and do not need to share a pipeline, which can prevent the vacuum pumping system from suctioning residual electrolyte, thereby avoiding the problem that pipelines and valve bodies of the vacuum pumping system are blocked by electrolyte crystallization.

### BRIEF DESCRIPTION OF DRAWINGS

FIG. 1 is a schematic flowchart of an electrolyte injection method for a battery according to an embodiment of the present disclosure.
FIG. 2 is a schematic diagram of a partial structure of processing equipment according to an embodiment of the present disclosure.
FIG. 3 is a cross-sectional view of FIG. 2.

Reference signs
1. electrolyte injection device; 11. electrolyte injection cup; 12. valve-opening device; 13. electrolyte injection cup tray; 2. battery; 21. switch valve; and 3. battery tray.

### DESCRIPTION OF EMBODIMENTS

It should be noted that in absence of conflicts, some embodiments and features in some embodiments in the present disclosure may be combined with each other. The detailed descriptions in the specific embodiments should be understood as explanations of the purpose of the present disclosure and should not be regarded as improper limitations on the present disclosure.

Unless otherwise defined, all technical and scientific terms used herein shall have the same meanings as commonly understood by persons skilled in the art to which the present disclosure relates. The terms used herein are intended to merely describe the specific embodiments rather than to limit the present disclosure. The terms "include", "comprise", and "have" and any other variations thereof in the present disclosure are intended to cover non-exclusive inclusions.

In the description of the embodiments of the present disclosure, the technical terms "first", "second", "third", and the like are merely intended to distinguish between different objects, and shall not be understood as any indication or implication of relative importance or any implicit indication of the number, specific sequence, or primary-secondary relationship of the technical features indicated. In the description of the embodiments of the present disclosure, "a plurality of" means at least two unless otherwise specifically stated.

In this specification, reference to "embodiment" means that specific features, structures, or characteristics described with reference to the embodiment may be included in at least one embodiment of the present disclosure. The word "embodiment" appearing in various positions in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of the present disclosure, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

In the description of the embodiments of the present disclosure, the technical terms "length", "width", "thickness", "upper", "lower", "front", "rear", "left", "right", "vertical", "horizontal", "top", "bottom", "inner", "outer", "circumferential", "height direction", "first direction", "second direction", and the like indicate orientation or positional relationships based on the orientation or positional relationships shown in the accompanying drawings, and are only for the convenience of describing the embodiments of the present disclosure and simplifying the description, and are not intended to indicate or imply that the referred device or element must have a specific orientation, be constructed, operated, or used in a specific orientation. Therefore, it should not be understood as a limitation on the embodiments of the present disclosure.

In the description of the embodiments of the present disclosure, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skill in the art can understand specific meanings of the foregoing terms in the embodiments of the present disclosure as suitable to specific situations.

In the description of the embodiments of the present disclosure, unless otherwise specified and defined explicitly, the technical term "contact" should be understood in a general sense, which can be direct contact or contact through an intermediate medium layer, can be contact with essentially no interaction force between the two contacting parties, or can be contact with interaction force between the two contacting parties.

With the development of clean energy, more and more equipment uses electric energy as driving energy, and traction batteries that can store more electric energy and can be repeatedly charged and discharged have been rapidly developed, such as lithium-ion batteries. Traction batteries have been widely used in energy storage power supply systems such as hydroelectric power plants, thermal power plants, wind power plants, and solar power plants, and many other fields including electric transportation tools such as electric bicycles, electric motorcycles, and electric vehicles, and aerospace.

The battery mentioned in the embodiments of the present disclosure is a single physical module that includes one or more battery cells for providing higher voltage and capacity. For example, the battery mentioned in the present disclosure may include a battery module or a battery pack. A battery generally includes a box body for packaging one or more battery cells. The box body can prevent liquid or other foreign matter from affecting the charging or discharging of the battery cells.

In the present disclosure, the battery cell may include a lithium-ion secondary battery, a lithium-ion primary battery, a lithium-sulfur battery, a sodium-lithium-ion battery, a sodium-ion battery, a magnesium-ion battery, or the like. The embodiments of the present disclosure are not limited thereto. The battery cell may be cylindrical, cuboid, or of other shapes. This is not limited in the embodiments of the present disclosure either.

The battery cell includes an electrode assembly and an electrolyte. The electrode assembly is composed of a positive electrode plate, a negative electrode plate, and a separator. The battery cell works mainly depending on migration of metal ions between the positive electrode plate and the negative electrode plate. The positive electrode plate includes a positive electrode current collector and a positive electrode active substance layer. A surface of the positive electrode current collector is coated with the positive electrode active substance layer. A positive electrode current collector uncoated with the positive electrode active substance layer protrudes out of a positive electrode current collector coated with the positive electrode active substance layer, and the positive electrode current collector uncoated with the positive electrode active substance layer serves as a positive electrode tab. A lithium-ion battery is used as an example, in which a positive electrode current collector may be made of aluminum, and the positive electrode active material may be lithium cobaltate, lithium iron phosphate, ternary lithium, lithium manganate, or the like. The negative electrode plate includes a negative electrode current collector and a negative electrode active substance layer. A surface of the negative electrode current collector is coated with the negative electrode active substance layer. A negative electrode current collector uncoated with the negative electrode active substance layer protrudes out of a negative electrode current collector coated with the negative electrode active substance layer, and the negative electrode current collector uncoated with the negative electrode active substance layer serves as a negative electrode tab. The negative electrode current collector may be made of copper, and the negative electrode active substance may be carbon, silicon, or the like. To allow a large current to pass through without any fusing, a plurality of positive electrode tabs are provided and stacked together, and a plurality of negative electrode tabs are provided and stacked together. The separator may be made of PP (polypropylene, polypropylene), PE (polyethylene, polyethylene), or the like.

The battery cell further includes an insulating film and a shell. The insulating film is coated on an exterior of the electrode assembly. The shell encapsulates the electrode assembly coated with the insulating film to form a battery cell. The insulating film may be a mylar film (mylar film), and the shell may be an aluminum shell. After the electrode assembly is wound and formed, the encapsulation of the mylar film and the shell is completed through a Mylar wrapping process and a shell entering process. The mylar film seals and protects the electrode assembly, and the mylar film can effectively insulate the electrode assembly from the shell to avoid internal short circuits of the battery cell. The shell plays a protective role.

The electrolyte injection process is an important link in the process of manufacturing of a battery. The electrolyte injection accuracy is directly related to the cycle performance, consistency, and other aspects of lithium ions.

In the related art, before an electrolyte injection hole of a battery is sealed, the interior of a housing of the battery communicates with the external environment, so that the environment of the housing is not a vacuum environment before electrolyte injection of the battery. It is necessary to continuously maintain a relatively sealed state from the external environment after vacuum pumping operation for the battery is completed. A common solution is to use a shared pipeline for vacuum pumping and electrolyte injection. After the vacuum pumping operation is completed, function switching is achieved by switching to an electrolyte injection switch valve. Since electrolyte residue is difficult to avoid in the pipeline, combined with vacuum diffusion, the pipelines and valve bodies of a vacuum pumping device are eventually blocked by electrolyte crystallization.

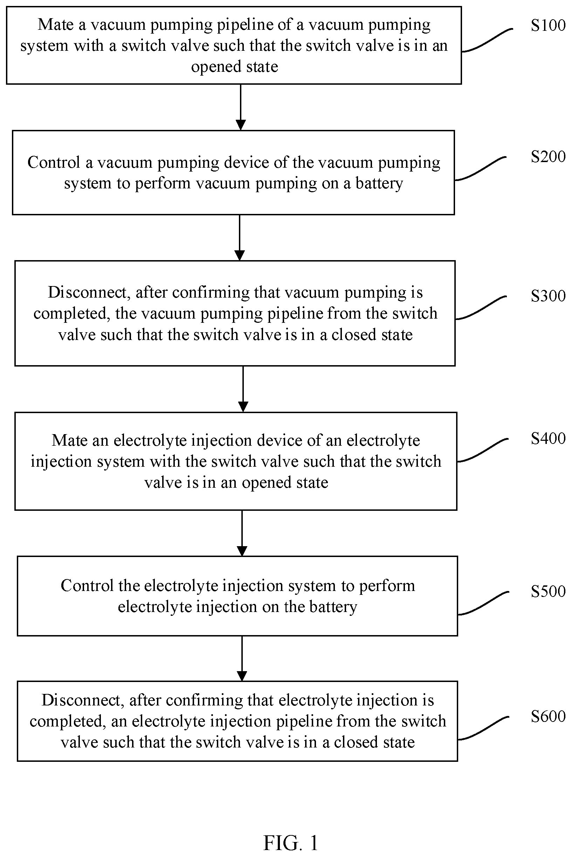

In order to avoid the problem that pipelines and valve bodies of a vacuum pumping system are blocked by electrolyte crystallization, embodiments of the present disclosure provide an electrolyte injection method for a battery 2, which is applied to processing equipment for production of the battery 2. The battery 2 includes a switch valve 21 having an opened state and a closed state. The processing equipment includes a vacuum pumping system and an electrolyte injection system that are independent of each other. Referring to FIG. 1, the electrolyte injection method includes a vacuum pumping step and an electrolyte injection step after the vacuum pumping step.

The vacuum pumping step includes:
Step S100: Mate a vacuum pumping pipeline of the vacuum pumping system with the switch valve such that the switch valve is in an opened state.
Step S200: Control a vacuum pumping device of the vacuum pumping system to perform vacuum pumping on a battery.
Step S300: Disconnect, after confirming that vacuum pumping is completed, the vacuum pumping pipeline from the switch valve such that the switch valve is in a closed state.

The electrolyte injection step includes:
Step S400: Mate an electrolyte injection device of the electrolyte injection system with the switch valve such that the switch valve is in an opened state.
Step S500: Control the electrolyte injection system to perform electrolyte injection on the battery.
Step S600: Disconnect, after confirming that electrolyte injection is completed, an electrolyte injection pipeline from the switch valve such that the switch valve is in a closed state.

The battery 2 includes a switch valve 21 having an opened state and a closed state. That is, when the switch valve 21 is not subjected to an external force, an internal cavity of the battery 2 remains relatively sealed from the external environment. In other words, the switch valve 21 is a normally closed valve.

The embodiments of the present disclosure further provide processing equipment for production of the battery 2. The processing equipment includes a vacuum pumping system and an electrolyte injection system that are independent of each other.

The vacuum pumping system and the electrolyte injection system being independent of each other means that the vacuum pumping system and the electrolyte injection system are completely separated and do not share pipelines.

The vacuum pumping system includes a vacuum pumping device and a vacuum pumping pipeline. The vacuum pumping pipeline is mated with the switch valve 21 such that the switch valve 21 is in an opened state. At this time, the vacuum pumping pipeline communicates with the internal cavity of the battery 2. The vacuum pumping device is turned on to achieve vacuum pumping of the battery 2.

The vacuum pumping device is, for example, a vacuum pump.

For example, the vacuum pumping system further includes a vacuum pumping valve body for selectively communicating or cutting off the vacuum pumping pipeline.

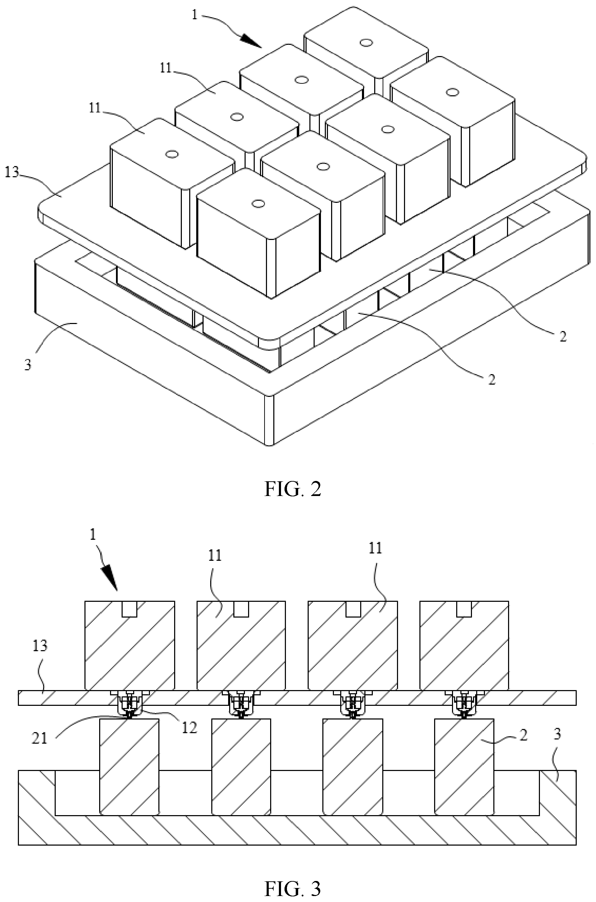

Referring to FIG. 2 and FIG. 3, the electrolyte injection system includes an electrolyte injection device 1. The electrolyte injection device 1 is mated with the switch valve 21 such that the switch valve 21 is in an opened state. At this time, the electrolyte injection device 1 communicates with the internal cavity of the battery 2, and the electrolyte injection system is controlled to perform electrolyte injection on the battery 2 to achieve electrolyte injection of the battery 2.

In some embodiments, the electrolyte injection device 1 includes an electrolyte injection cup 11 and a valve-opening device 12 having an opened state and a closed state. The valve-opening device 12 is configured to mate with the switch valve 21 and open the switch valve 21 such that an internal cavity of the electrolyte injection cup 11 communicates with the internal cavity of the battery 2.

For example, referring to FIG. 2 and FIG. 3, the processing equipment further includes an electrolyte injection cup tray 13. The valve-opening device 12 is arranged on the electrolyte injection cup tray 13. When the electrolyte injection cup 11 is arranged on the electrolyte injection cup tray 13, a cavity inside the electrolyte injection cup 11 communicates with a flow channel of the valve-opening device 12 for allowing the electrolyte in the electrolyte injection cup 11 to enter the internal cavity of the battery 2 through the flow channel.

For example, referring to FIG. 2 and FIG. 3, the processing equipment further includes a battery tray 3. The battery 2 is arranged on the battery tray 3. The mating between the valve-opening device 12 and the switch valve 21 can be achieved by controlling movement of the electrolyte injection cup tray 13 and/or the battery tray 3.

Still referring to FIG. 2 and FIG. 3, when the battery 2 is injected with the electrolyte, the valve-opening device 12 can be used as an electrolyte injection nozzle, the valve-opening device 12 communicates with the electrolyte injection cup 11, and the electrolyte in the electrolyte injection cup 11 flows from the flow channel of the valve-opening device 12 into the internal cavity of the battery 2. In the opened state, the electrolyte in the electrolyte injection cup 11 is injected from the flow channel of the valve-opening device 12 into the internal cavity of the battery 2.

In some embodiments, the electrolyte injection device 1 includes an electrolyte injection cup 11 and a valve-opening device 12 having an opened state and a closed state. The valve-opening device 12 is configured to mate with the switch valve 21 and open the switch valve 21 such that the internal cavity of the electrolyte injection cup 11 communicates with the internal cavity of the battery 2. The mating the electrolyte injection device 1 of the electrolyte injection system with the switch valve 21 such that the switch valve 21 is in an opened state includes: mating the valve-opening device 12 with the switch valve 21 such that both the switch valve 21 and the valve-opening device 12 are in an opened state.

By providing a valve-opening device 12 having an opened state and a closed state, in the closed state, the flow channel of the valve-opening device 12 does not communicate with the internal cavity of the battery 2. In this way, even if the electrolyte in the electrolyte injection cup 11 enters the flow channel of the valve-opening device 12, the electrolyte in the valve-opening device 12 does not flow out through the flow channel. In the process of performing electrolyte injection on the battery 2, the switch valve 21 of the battery 2 can apply a force to the valve-opening device 12. The valve-opening device 12 can be switched from the closed state to the opened state under the action of an external force. At this time, the flow channel of the valve-opening device 12 communicates with the internal cavity of the battery 2, and the electrolyte in the electrolyte injection cup 11 can enter the interior of the battery 2 through the flow channel to achieve electrolyte injection. After electrolyte injection is completed, the valve-opening device 12 and the switch valve 21 are disconnected, and the valve-opening device 12 is switched from the opened state to the closed state. That is, the valve-opening device 12 is a normally closed valve-opening device 12. In this way, electrolyte can be injected into the electrolyte injection cup 11 in advance at any time before the battery 2 and the electrolyte injection cup 11 are combined, which can reduce serial time (electrolyte preparation time) and improve production efficiency and production tempo.

In some embodiments, an opening pressure of the valve-opening device 12 is greater than or equal to an opening pressure of the switch valve 21.

The opening pressure of the valve-opening device 12 is greater than the opening pressure of the switch valve 21. That is, after the valve-opening device 12 abuts against the switch valve 21, since the valve-opening device 12 and the switch valve 21 are subjected to mutual interaction force, the switch valve 21 opens first and the valve-opening device 12 opens later. In this way, during the electrolyte injection process, the situation where the switch valve 21 of the battery 2 is still in a closed state after the valve-opening device 12 is opened can be avoided, thereby mitigating the problem of electrolyte leakage.

The opening pressure of the valve-opening device 12 is equal to the opening pressure of the switch valve 21. That is, after the valve-opening device 12 abuts against the switch valve 21, since the valve-opening device 12 and the switch valve 21 are subjected to mutual interaction force, the switch valve 21 and the valve-opening device 12 open simultaneously. In this way, during the electrolyte injection process, the situation where the switch valve 21 of the battery 2 is still in a closed state after the valve-opening device 12 is opened can be avoided, thereby mitigating the problem of electrolyte leakage.

By setting the opening pressure of the valve-opening device 12 to be greater than or equal to the opening pressure of the switch valve 21, the situation where the switch valve 21 of the battery 2 is still in a closed state after the valve-opening device 12 is opened can be avoided, thereby mitigating the problem of electrolyte leakage.

The battery 2 includes a switch valve 21 having an opened state and a closed state. That is, the switch valve 21 is normally closed. When the switch valve 21 is not subjected to an external force, the internal cavity of the battery 2 remains relatively sealed from the external environment.

The electrolyte injection system includes a vacuum pumping system that is independent of the electrolyte injection system. In this way, a vacuum pumping pipeline of the vacuum pumping system and an electrolyte injection pipeline of the electrolyte injection system are not shared, which avoids the situation where blockage of the pipelines and valve bodies due to residual electrolyte in the pipeline diffusing to other pipelines and valve bodies of a vacuum pumping module during the vacuum pumping process.

The electrolyte injection method for the battery 2 of the embodiments of the present disclosure is applied to processing equipment for production of the battery 2. The battery 2 includes the switch valve 21 having an opened state and a closed state. The processing equipment includes a vacuum pumping system and an electrolyte injection system that are independent of each other. The vacuum pumping pipeline of the vacuum pumping system is mated with the switch valve 21 to perform vacuum pumping. After confirming that vacuum pumping is completed, the vacuum pumping pipeline is disconnected from the switch valve 21 such that a vacuum state is maintained inside the battery 2. Then, an electrolyte injection device 1 of the electrolyte injection system is mated with the switch valve 21 to perform electrolyte injection. After confirming that electrolyte injection is completed, the electrolyte injection device 1 is disconnected from the switch valve 21 to complete electrolyte injection of the battery 2. In this way, the vacuum pumping system and the electrolyte injection system are independent of each other and do not need to share a pipeline, which can prevent the vacuum pumping system from suctioning residual electrolyte, thereby avoiding the problem that pipelines and valve bodies of the vacuum pumping system are blocked by electrolyte crystallization.

In the related art, the vacuum pumping step and the electrolyte injection step are arranged at the same station. To ensure production efficiency, it is necessary to improve production efficiency by reducing the vacuum degree of the internal cavity of the battery and compressing the vacuum pumping duration before electrolyte injection of the battery. Since a higher vacuum degree indicates higher electrolyte injection efficiency, reducing the target vacuum degree simultaneously reduces the electrolyte injection efficiency.

In some embodiments, the processing equipment includes a first station and a second station. The vacuum pumping step is performed at the first station, and the electrolyte injection step is performed at the second station.

That is, the vacuum pumping step and the electrolyte injection step are arranged at different stations. Specifically, the vacuum pumping step and the electrolyte injection step are separated, where the vacuum pumping step is performed at the first station, and the electrolyte injection step is performed at the second station. In this way, the vacuum pumping time in the vacuum pumping step can be increased to improve the vacuum degree of the internal cavity of the battery 2 and improve electrolyte injection efficiency without affecting the production tempo.

In some embodiments, the electrolyte injection method further includes an electrolyte preparation step. The electrolyte preparation step is performed before the vacuum pumping step, or is performed simultaneously with the vacuum pumping step; where the electrolyte preparation step is used to inject electrolyte into the electrolyte injection cup 11.

Since both the switch valve 21 of the battery 2 and the valve-opening device 12 of the electrolyte injection system are normally closed, electrolyte can be injected into the electrolyte injection cup 11 in advance at any time before the battery 2 and the electrolyte injection cup 11 are combined, thereby reducing serial time (electrolyte preparation time) to improve production efficiency.

In some embodiments, both the switch valve 21 and the valve-opening device 12 being in an opened state includes: controlling the switch valve 21 to open before the valve-opening device 12; or controlling the switch valve 21 and the valve-opening device 12 to open simultaneously.

During electrolyte injection, a lifting system causes a valve-opening device 12 of an electrolyte injection cup 11 to come into contact with the switch valve 21 of the battery 2 (for example, controlling the electrolyte injection cup tray 13 to move toward the battery 2, or controlling the battery tray 3 to move toward the electrolyte injection cup 11). First, the valve-opening device 12 of the electrolyte injection cup 11 comes into contact with the switch valve 21 of the battery 2. An electrolyte injection channel formed after contact remains in a sealed state from the external environment. Since the valve-opening device 12 and the switch valve 21 are subjected to mutual interaction force, the switch valve 21 is forced to open. At the same time, the valve-opening device 12 is also opened by the interaction force. At this time, both the valve-opening device 12 and the switch valve 21 are in an opened state, and an electrolyte injection module is controlled to perform electrolyte injection on the battery 2. After confirming that electrolyte injection is completed, the valve-opening device 12 is disconnected from the switch valve 21 such that both the valve-opening device 12 and the switch valve 21 are in a closed state.

In some embodiments, the switch valve 21 is controlled to open before the valve-opening device 12, or the switch valve 21 and the valve-opening device 12 are controlled to open simultaneously, that is, the opening pressure of the valve-opening device 12 is greater than or equal to the opening pressure of the switch valve 21.

The opening pressure of the valve-opening device 12 is greater than the opening pressure of the switch valve 21. That is, after the valve-opening device 12 abuts against the battery 2, since the valve-opening device 12 and the switch valve 21 are subjected to mutual interaction force, the switch valve 21 opens first and the valve-opening device 12 opens later. In this way, during the electrolyte injection process, the situation where the switch valve 21 of the battery 2 is still in a closed state after the valve-opening device 12 is opened can be avoided, thereby mitigating the problem of electrolyte leakage.

The opening pressure of the valve-opening device 12 is equal to the opening pressure of the switch valve 21. That is, after the valve-opening device 12 abuts against the battery 2, since the valve-opening device 12 and the switch valve 21 are subjected to mutual interaction force, the switch valve 21 and the valve-opening device 12 open simultaneously. In this way, during the electrolyte injection process, the situation where the switch valve 21 of the battery 2 is still in a closed state after the valve-opening device 12 is opened can be avoided, thereby mitigating the problem of electrolyte leakage.

By setting the opening pressure of the valve-opening device 12 to be greater than or equal to the opening pressure of the switch valve 21, the situation where the switch valve 21 of the battery 2 is still in a closed state after the valve-opening device 12 is opened can be avoided, thereby mitigating the problem of electrolyte leakage.

In some embodiments, referring to FIG. 2 and FIG. 3. The electrolyte injection method further includes an assembling step. The assembling step is performed before the vacuum pumping step, or is performed after the vacuum pumping step; where the assembling step is used for assembling individual batteries 2 into a battery 2 assembly.

The electrolyte injection method further includes an assembling step. The assembling step is used for assembling individual batteries 2 into the battery 2 assembly, which facilitates the transfer of the batteries 2 and subsequent operations, thereby improving production efficiency.

For example, a plurality of batteries 2 are placed on a battery tray 3 to form a battery 2 tray.

It should be noted that the assembling step may be performed before the vacuum pumping step or after the vacuum pumping step. That is, vacuum pumping may be performed before the batteries 2 are assembled, that is, individual batteries 2 are assembled into the battery 2 assembly after vacuum pumping; or vacuum pumping may be performed after the batteries 2 are assembled, that is, individual batteries 2 are first formed into the battery 2 assembly, and vacuum pumping is then performed on the battery 2 assembly.

In some embodiments, the processing equipment further includes a detection device. Before the vacuum pumping step, the detection device is used to detect whether the switch valve 21 is in a closed state.

By providing a detection device and using the detection device to detect whether the switch valve 21 is in a closed state before the vacuum pumping step, for example, to detect whether the switch valve 21 is missing or damaged, the situation where vacuum pumping of the battery 2 cannot be performed due to missing or damaged switch valve 21 can be avoided to a certain extent, thereby improving production efficiency of the battery 2 and quality of the battery 2 to a certain extent.

In some embodiments, the processing equipment further includes a detection device. Before the electrolyte injection step, the detection device is used to detect whether the switch valve 21 is in a closed state.

By providing a detection device and using the detection device to detect whether the switch valve 21 is in a closed state before the electrolyte injection step, for example, to detect whether the switch valve 21 is missing or damaged, the situation where electrolyte injection of the battery 2 cannot be performed due to missing or damaged switch valve 21 can be avoided to a certain extent, thereby improving production efficiency of the battery 2 and quality of the battery 2 to a certain extent.

It should be noted that the specific type of the detection device is not limited herein, as long as it can detect whether the switch valve 21 is missing or damaged.

For example, the detection device is an optical fiber sensor or a machine vision device.

Machine vision is a branch of artificial intelligence that is developing rapidly. Simply put, machine vision is the use of machines instead of human eyes to make measurements and judgments. A machine vision system converts a photographed target into an image signal through a machine vision product (that is, an image acquisition device, divided into CMOS and CCD), transmits the image signal to a dedicated image processing system, obtains morphological information of the photographed target, converts the information into a digital signal according to pixel distribution, brightness, color, and other information; and the image system performs various operations on these signals to extract features of the target, and then controls the actions of on-site equipment according to the judgment results.

In some embodiments, the method for confirming completion of vacuum pumping includes: confirming completion of vacuum pumping based on a target vacuum degree inside a battery 2.

That is, by detecting the vacuum degree inside the battery 2, when the vacuum degree inside the battery 2 reaches the target vacuum degree, it indicates that vacuum pumping is completed and vacuum pumping can be stopped.

In some embodiments, the method for confirming completion of vacuum pumping includes: confirming completion of vacuum pumping based on a target vacuum pumping time for the battery 2.

That is, by timing the vacuum pumping time of the battery 2, when the vacuum pumping time for the battery 2 reaches the target vacuum pumping time, it indicates that vacuum pumping is completed and vacuum pumping can be stopped.

In some embodiments, the electrolyte injection system includes a mounting base, an electrolyte injection module, and a weighing module.

In the process of preparing electrolyte for the electrolyte injection cup 11, the weighing module and the electrolyte injection module are first assembled onto the mounting base. The electrolyte injection cup 11 is switched from a pre-installation state to an installation state. The weight of the electrolyte injection cup 11 is borne by the weighing module. The weighing module is used to weigh the electrolyte injection cup 11. The weighing module obtains an initial weight A₁ of each electrolyte injection cup 11 (that is, the weight of each electrolyte injection cup 11 before electrolyte injection). After weighing is completed, the system records the initial weight A₁ of each electrolyte injection cup 11, an electrolyte injection valve of the electrolyte injection device 1 is opened, and electrolyte is injected into the electrolyte injection cup 11. A real-time weight A₂ of the electrolyte injection cup 11 is obtained through the weighing module, and the system compares the difference of A₂-A₁ and a target weight A₀ to confirm whether the electrolyte preparation requirement is met. If the electrolyte preparation requirement is met, electrolyte preparation is completed. That is, by providing a weighing module for weighing the electrolyte injection cup 11, the injection amount of electrolyte in the electrolyte injection cup 11 can be determined without using an electrolyte injection pump to control the electrolyte injection amount, and there is no need for a degassing action, thereby improving electrolyte preparation efficiency. In addition, after the electrolyte in an electrolyte room is filtered by a filter, it can be directly injected into the electrolyte injection cup 11, which simplifies the structure, reduces costs, reduces occupied space, and improves the structural compactness of the electrolyte injection system. The electrolyte preparation step of the electrolyte injection method has high efficiency, and before the normally closed valve-opening device 12 is unlocked, the electrolyte injection cup 11 remains relatively sealed from the outside world, ensuring that electrolyte does not leak during electrolyte injection weighing. At the same time, the electrolyte injection weighing action can be completed when the batteries 2 is assembled into a tray, thereby improving the production tempo.

In addition, after the electrolyte injection cup 11 completes electrolyte injection, the real-time weight A₂ of the electrolyte injection cup 11 (A₂ refers to the weight of the electrolyte injection cup 11 after electrolyte is injected, that is, the weight of the electrolyte injection cup 11 itself and the weight of the electrolyte) can be obtained through the weighing module. After the electrolyte in the electrolyte injection cup 11 is injected into the battery 2, the electrolyte injection cup 11 at this time is weighed to obtain A₃ (A₃ refers to the weight of the electrolyte injection cup 11 itself and the weight of residual electrolyte), that is, the weight of the electrolyte injected into the interior of the battery 2 is A₂-A₃. That is, by adopting the electrolyte injection method of the embodiments of the present disclosure, the process of separately weighing the battery 2 before and after electrolyte injection can be eliminated, thereby improving production efficiency.

In a specific embodiment, the flow of the electrolyte injection method for the battery 2 is as follows:

Assembling step: Assemble individual batteries 2 into a battery 2 assembly.

First detection step: Detect, before the vacuum pumping step, whether a state of the switch valve 21 of the battery 2 is normal (present or damaged) by detection means such as an optical fiber sensor and machine vision.

Vacuum pumping step: Perform, by the vacuum pumping system, vacuum pumping on the battery 2 assembly at the first station; stop vacuum pumping after the interior of the battery 2 reaches a target vacuum degree (this step can be completed at any time before electrolyte injection of the battery 2 in the form of individual units or in a whole tray), where a normally closed switch valve 21 provided at the electrolyte injection hole of the battery 2 enables the vacuum state inside the battery 2 to be maintained after the vacuum pumping of the battery 2 is stopped.

Second detection step: Detect, before electrolyte injection, whether a state of a normally closed switch valve 21 of the battery 2 is normal (present or damaged) by detection means such as an optical fiber sensor and machine vision.

Electrolyte preparation step: Inject, by the electrolyte injection pump, electrolyte into the electrolyte injection cup 11, where electrolyte can be injected into the electrolyte injection cup 11 in advance at any time before the battery 2 and the electrolyte injection cup 11 are combined to improve efficiency. At this time, the electrolyte injection cup 11 is designed with a normally closed valve-opening device 12. When the valve-opening device 12 is not subjected to an external force, a bottom of the electrolyte injection cup 11 remains relatively sealed from the external environment. After contacting and applying pressure to the switch valve 21 of the battery 2, electrolyte inside the electrolyte injection cup 11 flows out.

Electrolyte injection step: Apply, by the lifting mechanism, pressure to the switch valve 21 of the battery 2 through the electrolyte injection cup 11 and maintain the pressure, where both the valve-opening device 12 and the switch valve 21 are opened, and electrolyte is injected into the battery 2 under the action of vacuum and gravity. After electrolyte injection is completed, the applied pressure is released, both the valve-opening device 12 and the switch valve 21 are closed, and the combined sealed state of the battery 2 and the electrolyte injection cup 11 is released to complete electrolyte injection.

In the description of the present disclosure, the description referring to the terms "in one embodiment", "in some embodiments", "in some other embodiments", "in still some other embodiments", or "for example" means a specific feature, structure, material or characteristic described with reference to the embodiment or example is included in at least one embodiment or example of the present disclosure. In the present disclosure, the illustrative expressions of these terms do not necessarily refer to the same embodiment or example. In addition, the specific feature, structure, material or characteristic described can be combined in any appropriate manner in any one or more embodiments or examples. Besides, without mutual conflict, persons skilled in the art can incorporate different embodiments or examples and features of the different embodiments or examples described in the present disclosure.

The foregoing descriptions are merely preferred embodiments of the present disclosure which are not intended to limit the present disclosure. Persons skilled in the art understand that the present disclosure may have various modifications and variations. Any modifications, equivalent replacements, and improvements made without departing from the spirit and principle of the present disclosure shall fall within the protection scope of the present disclosure.

## Claims

1. An electrolyte injection method for a battery, applied to processing equipment for production of the battery, the battery comprising a switch valve having an opened state and a closed state, the processing equipment comprising a vacuum pumping system and an electrolyte injection system that are independent of each other;
the electrolyte injection method comprising a vacuum pumping step and an electrolyte injection step after the vacuum pumping step;
wherein the vacuum pumping step comprises:
mating a vacuum pumping pipeline of the vacuum pumping system with the switch valve such that the switch valve is in an opened state;
controlling a vacuum pumping device of the vacuum pumping system to perform vacuum pumping on the battery; and
disconnecting, after confirming that vacuum pumping is completed, the vacuum pumping pipeline from the switch valve such that the switch valve is in a closed state; and
the electrolyte injection step comprises:
mating an electrolyte injection device of the electrolyte injection system with the switch valve such that the switch valve is in an opened state;
controlling the electrolyte injection system to perform electrolyte injection on the battery; and
disconnecting, after confirming that electrolyte injection is completed, the electrolyte injection device from the switch valve such that the switch valve is in a closed state.

2. The electrolyte injection method according to claim 1, wherein the processing equipment comprises a first station and a second station, the vacuum pumping step is performed at the first station, and the electrolyte injection step is performed at the second station.

3. The electrolyte injection method according to claim 1 or 2, wherein the electrolyte injection device comprises an electrolyte injection cup and a valve-opening device having an opened state and a closed state, the valve-opening device is configured to mate with the switch valve and open the switch valve such that an internal cavity of the electrolyte injection cup communicates with an internal cavity of the battery; and the mating the electrolyte injection device of the electrolyte injection system with the switch valve such that the switch valve is in an opened state comprises:
mating the valve-opening device with the switch valve such that both the switch valve and the valve-opening device are in an opened state.

4. The electrolyte injection method according to claim 3, wherein the electrolyte injection method further comprises an electrolyte preparation step, the electrolyte preparation step is performed before the vacuum pumping step, or is performed simultaneously with the vacuum pumping step; wherein the electrolyte preparation step is used to inject electrolyte into the electrolyte injection cup.

5. The electrolyte injection method according to claim 3 or 4, wherein both the switch valve and the valve-opening device being in an opened state comprises:
controlling the switch valve to open before the valve-opening device; or controlling the switch valve and the valve-opening device to open simultaneously.

6. The electrolyte injection method according to any one of claims 1 to 5, wherein the electrolyte injection method further comprises an assembling step, the assembling step is performed before the vacuum pumping step, or is performed after the vacuum pumping step; wherein the assembling step is used for assembling individual batteries into a battery assembly.

7. The electrolyte injection method according to any one of claims 1 to 6, wherein the processing equipment further comprises a detection device, and before the vacuum pumping step, the detection device is used to detect whether the switch valve is in a closed state.

8. The electrolyte injection method according to any one of claims 1 to 7, wherein the processing equipment further comprises a detection device, and before the electrolyte injection step, the detection device is used to detect whether the switch valve is in a closed state.

9. The electrolyte injection method according to claim 7 or 8, wherein the detection device is an optical fiber sensor or a machine vision device.

10. The electrolyte injection method according to any one of claims 1 to 9, wherein the method for confirming completion of vacuum pumping comprises:
confirming completion of vacuum pumping based on a target vacuum degree inside the battery.

11. The electrolyte injection method according to any one of claims 1 to 10, wherein the method for confirming completion of vacuum pumping comprises:
confirming completion of vacuum pumping based on a target vacuum pumping time for the battery.
